# EUROPÄISCHE PATENTSCHRIFT

(11) **EP 2 701 291 B1**
(45) Veröffentlichungstag und Bekanntmachung des Hinweises auf die Patenterteilung: **12.08.2015**
(21) Anmeldenummer: 12181204.4
(22) Anmeldetag: 21.08.2012
(51) Int. Cl.: H02K 29/08

(54) **Elektrische Kfz-Fluidikpumpe**
Electric fluidic pump for a vehicle
Pompe à fluide électrique pour véhicule automobile

(43) Veröffentlichungstag der Anmeldung: 26.02.2014
(73) Patentinhaber: Pierburg Pump Technology GmbH, 41460 Neuss (DE)
(72) Erfinder: Malvasi, Alessandro, Dr., 40476 Düsseldorf (DE); Bürger, Frank, 52379 Langerwehe (DE); Karbstein, Gabriele, 41748 Viersen (DE)
(74) Vertreter: Patentanwälte ter Smitten Eberlein Rütten Partnerschaftsgesellschaft

(56) Entgegenhaltungen:
- EP-A2- 1 146 625
- DE-A1- 2 918 329
- DE-A1- 3 434 965
- JP-A- 10 311 290

## Beschreibung

Die Erfindung bezieht sich auf eine elektrische Kfz-Fluidikpumpe mit einem bürstenlosen und elektronisch kommutierten Antriebsmotor, der für die exakte Detektion der rotatorischen Rotorlage mehrere Hallsensoren aufweist.

Für einen möglichst sicheren und energieeffizienten Betrieb einer Kfz-Fluidikpumpe, die durch einen elektronisch kommutierten Antriebsmotor angetrieben wird, ist die exakte Detektion der rotatorischen Rotorlage des Motorrotors von großer Bedeutung, da erst hierdurch eine exakte Steuerung und Regelung des Antriebsmotors realisiert werden kann. Hierbei können einerseits unerwünschte Betriebszustände, wie beispielsweise Anlaufprobleme, das sogenannte Toggeln etc. vermieden werden, die insbesondere bei Verdränger- Fluidikpumpen wegen der stark variierenden Drehmomente auftreten können. Zum anderen wird durch eine exakte Terminierung der Stromwendung in den statorseitigen Magnetspulen der absolute Energieverbrauch minimiert.

Für eine exakte Rotorlage- Detektion werden daher Hallsensoren verwendet, die axial des permanentmagnetisch erregten Motorrotors beispielsweise auf dem Radius der Rotorpole angeordnet sind, und auf diese Weise die von den Rotorpolen generierten vorbeidrehenden Magnetfelder detektieren. Für die Genauigkeit der Rotorlage- Detektion mit den Hallsensoren sind die absolute Feldstärke des durch den betreffenden Hallsensor detektieren Magnetfeldes der Rotorpole sowie die Größe von Störsignalen ausschlaggebend.

Aus EP 1 146 625 A2 ist eine elektrische Kfz-Hydraulikpumpe mit einem bürstenlosen und elektronisch kommutierten Antriebsmotor bekannt, der einen permanentmagnetischen Motorrotor mit mehreren Rotorpolen aufweist. Die Lagedetektion erfolgt über mehrere statorseitige Hallsensoren, die das von dem permanentmagnetischen Motorrotor generierte Permanent-Magnetfeld radial erfassen.

Aus DE 3434965 ist ein Taschendiktiergerät-Elektromotor bekannt, der einen permanentmagnetischen Motorrotor aufweist. Die Hallsensoren sind axial außerhalb des Motorrotors angeordnet.

Die Druckschrift DE 2918329 offenbart einen Hallsensor, dem ein Feldleitstift zugeordnet ist.

Aufgabe der Erfindung ist es, eine Kfz-Fluidikpumpe mit einem elektronisch kommutierten Antriebsmotor zu schaffen, der eine hohe Betriebssicherheit und Energieeffizienz bei niedrigen Herstellungskosten aufweist.

Diese Aufgabe wird erfindungsgemäß gelöst mit einer elektrischen Kfz-Fluidikpumpe mit den Merkmalen des Patentanspruchs 1.

Die erfindungsgemäße Kfz-Fluidikpumpe weist einen bürstenlosen und elektrisch kommutierten Antriebsmotor auf, wobei der permanentmagnetisch erregte Motorrotor mehrere Rotorpole aufweist und statorseitig mehrere Magnetspulen vorgesehen sind. Für die Rotorlage-Detektion sind mindestens zwei statorseitige Hallsensoren vorgesehen, die in einer Querebene zur Motoraxialen liegend angeordnet sind. Die mindestens zwei Sensoren sind beabstandet zur Motoraxialen angeordnet, so dass sie die axialen Magnetfelder der vorbeidrehenden Rotorpole erfassen.

Es ist ein statischer ferromagnetischer Sensorschlusskörper vorgesehen, der alle zueinander beabstandeten Hallsensoren magnetisch unmittelbar miteinander verbindet. Hierdurch wird der magnetische Kreis für die in axialer Richtung abgestrahlten Magnetfelder der Rotorpole erheblich verbessert, d.h. der magnetische Widerstand in dem Hallsensor-Kreis wird verringert.

Der Sensorschlusskörper ist sternförmig ausgebildet und weist mehrere von der Mitte ausgehende Arme auf, nämlich für jeden Hallsensor einen Arm.

Die dem Motorrotor zugewandte Seite der Hallsensoren weist zu den Rotorpolen in der Regel nur einen relativ kleinen magnetischen Spalt auf. Durch den Sensorschlusskörper wird der magnetische Rückschluss für das Magnetfeld desjenigen Rotorpols, der einem Hallsensor magnetisch in diesem Moment gegenübersteht, erheblich verbessert. Hierdurch wiederum erhöht sich das Signal/Rauschverhältnis an jedem Hallsensor erheblich, so dass die Rotorlage genauer bestimmt werden kann. Hierdurch wiederum können unerwünschte Betriebszustände mit höherer Sicherheit ausgeschlossen werden. An die Qualität der eigentlichen Motorsteuerung und -regelung können umgekehrt geringere Anforderungen gestellt werden, so dass die Motorsteuerung und -regelung Im Prinzip einfacher und preiswerter ausfallen kann.

Alternativ oder ergänzend kann der magnetische Spalt zwischen dem Hallsensor und dem Motorrotor im Prinzip vergrößert werden. Zwar verringert sich hierdurch das absolute Nutzsignal, jedoch können die Hallsensoren räumlich weiter entfernt von den statorseitigen Magnetspulen angeordnet werden, die mit den von Ihnen generierten Magnetfeldern mitunter starke Störquellen für die Hallsensoren darstellen. Mit zunehmender räumlicher Entfernung der Hallsensoren von den statorseitigen Magnetspulen werden diese Störungen erheblich verringert, so dass das Signal/Rauschverhältnis verbessert wird.

Vorzugsweise ist eine in einer Querebene liegende Leiterbahn-Platine vorgesehen, auf der alle Hallsensoren angeordnet sind. Auf der Leiterbahn-Platine können sich ferner sowohl die Steuerungselektronik und die Leistungselektronik der Motorsteuerung befinden. Die Hallsensoren sind also nicht entfernt von der Platine mit der Steuerungs- und Leistungselektronik angeordnet. Hierdurch sind die Signalwege zwischen den Hallsensor und der Steuerungselektronik kurz. Die Anordnung sowohl der Hallsensoren als auch der Steuerungs- und Leistungselektronik auf einer einzigen Platine wird dadurch erleichtert oder gar erst ermöglicht, dass durch den Sensorschlusskörper das Nutzsignal so stark ist, dass die Hallsensoren nicht in unmittelbarer räumlicher Nähe zu den Rotorpolen angeordnet sein müssen.

Gemäß einer bevorzugten Ausgestaltung sind die Hallsensoren auf der dem Motorrotor zugewandten proximalen Seite der Leiterbahn-Platine vorgesehen. Die Hallsensoren sind also axial zwischen der Leiterbahn-Platine und dem Motorrotor angeordnet, sind also in räumlich möglichst geringer Entfernung zum Motorrotor platziert.

Vorzugsweise ist der Sensorschlusskörper auf der dem Motorrotor abgewandten distalen Seite der Leiterbahn-Platine vorgesehen. Dies ist insbesondere dann vorteilhaft, wenn die Hallsensoren auf der gegenüberliegenden proximalen Seite der Leiterbahn-Platine angeordnet sind.

Gemäß einer bevorzugten Ausgestaltung ist jedem Hallsensor proximal ein im Wesentlichen axial orientierter ferromagnetischer Feldleitstift zugeordnet. Der Hallsensor kann räumlich entfernt bzw. axial beanstandet von dem Motorrotor angeordnet werden, wodurch die Hallsensoren gemeinsam mit der Motorsteuerung auf einer einzigen Leiterbahn-Platine angeordnet sein können. Das proximale Ende des Feldleitstiftes ist dabei jeweils axial möglichst nah an dem Motorrotor vorgesehen. Der Feldleitstift bündelt und leitet das axiale Magnetfeld der Rotorpole relativ verlustarm zu dem jeweiligen Hallsensor. Die ferromagnetischen Feldleitstifte sorgen zusammen mit dem ferromagnetischen Sensorschlusskörper für einen verlustarmen magnetischen Kreis, der jeweils für ein starkes Nutzsignal an den Hallsensoren sorgt. Hierdurch können die Hallsensoren räumlich beanstandet zu den statorseitigen Magnetspulen angeordnet werden, so dass die von den Magnetspulen verursachten Störungen relativ gering sind. Dennoch ist das Nutzsignal so groß, dass die Motorsteuerung bei ausreichender Regelungsgenauigkeit relativ einfach ausgebildet sein kann, wodurch Herstellungskosten eingespart werden können.

Die Leiterbahn-Platine kann eine Rotorwellenöffnung aufweisen, durch die die Rotorwelle des Motorrotors hindurchragt. Der Sensorschlusskörper weist dann an dem Rand der Rotorwellenöffnung einen die Rotorwelle umgebenden Ring auf, ist also nicht sternförmig ausgebildet. Von dem Sensorschlusskörper-Ring können Radialarme nach außen ragen, die die magnetische Verbindung zu den Hallsensoren herstellen. Durch den Sensorschlusskörper-Ring wird ein magnetischer Schluss zu der Rotorwelle hergestellt, die bevorzugt ebenfalls ferromagnetisch ausgebildet ist. Auch durch diese Maßnahme wird der magnetische Schluss zwischen den Hallsensoren einerseits und den Rotorpolen andererseits verbessert.

Vorzugsweise ist die Leiterbahn-Platine in einen Kunststoff-Gusskörper eingegossen. Hierdurch wird die Leiterbahn-Platine einschließlich aller Hallsensoren und elektronischen Bauteile gut gegen mechanische und andere Störungen abgeschirmt. Ein Vergießen der Leiterbahn-Platine ist jedoch insofern problematisch, als sich hierdurch in der Regel die Kühlung der elektronischen Bauteile und insbesondere der Leistungselektronik bzw. -halbleiter verschlechtert. Da sich durch die Verbesserung des magnetischen Schlusses zwischen den Hallsensoren und den Rotorpolen jedoch die Regelungsgenauigkeit verbessert, und damit die in den Antriebsmotor eingespeiste elektrische Energie verringert wird, verringert sich auch die thermische Verlustleistung insbesondere der Leistungshalbleiter. Hierdurch wird ein Vergießen der Leiterbahn-Platine einschließlich der Leistungshalbleiter in einen Kunststoff-Gusskörper unter Umständen erst ermöglicht.

Im Folgenden werden zwei Ausführungsbeispiele der Erfindung anhand der Zeichnungen näher erläutert.

Es zeigen:
Figur 1 eine schematische Darstellung einer elektrischen Kfz-Fluidikpumpe mit einem elektrischen Antriebsmotor und einem Pumpenmodul,
Figur 2 einen Längsschnitt des Antriebsmotors der Kfz-Fluidikpumpe der Figur 1,
Figur 3 eine perspektivische Darstellung des Motorrotors und der Leiterbahn-Platine des Antriebsmotors der Figur 2, und
Figur 4 ein zweites Ausführungsbeispiel einer Leiterbahn-Platine mit einer zentralen Rotorwellen-Öffnung.

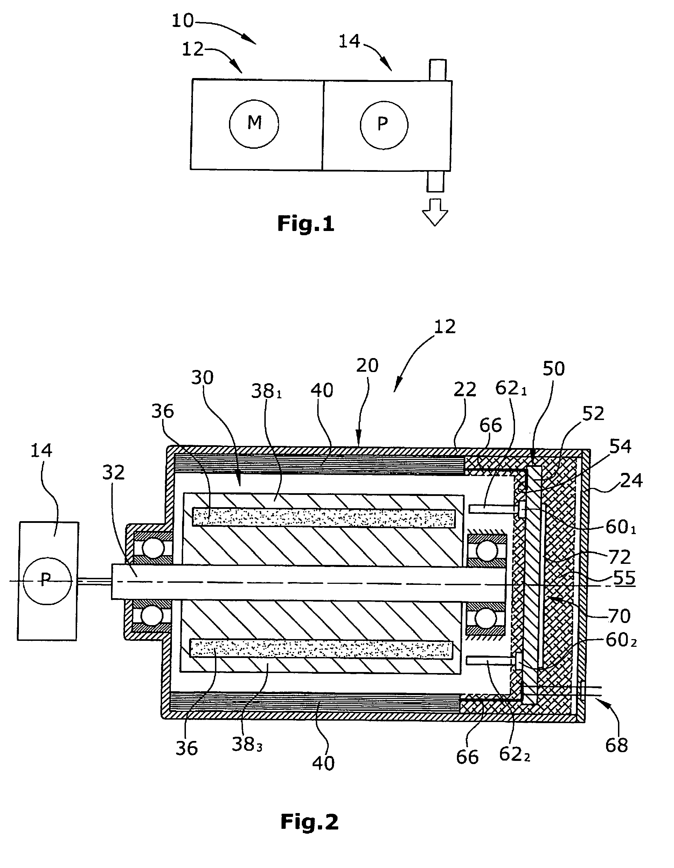

In der Figur 1 ist schematisch eine elektrische Kfz-Fluidikpumpe 10 dargestellt, die aus zwei Modulen besteht, nämlich einem elektrischen Antriebsmotor 12 und einem Pumpenmodul 14. Das Pumpenmodul 14 kann eine Verdrängerpumpe sein, beispielsweise eine Membranpumpe, Drehschieberpumpe, Flügelzellenpumpe oder Kolbenpumpe, kann jedoch auch eine Strömungspumpe sein, beispielsweise eine Zentrifugal- oder Impeller- Pumpe.

In der Figur 2 ist der Antriebsmotor 12 im Längsschnitt dargestellt. Der Antriebsmotor 12 ist ein bürstenloser und elektronisch kommutierter Antriebsmotor. Der Antriebsmotor 12 weist einen permanentmagnetisch erregten Motorrotor 30 mit vier Rotorpolen 38₁-38₄ auf, in denen jeweils ein Permanentmagnet 36 eingelagert ist. Statorseitig sind sechs Magnetspulen 40₁-40₆ vorgesehen, die ein umlaufendes Rotormagnetfeld erzeugen. Die sechs Magnetspulen 40 sind in einem Motorgehäuse 20 fixiert, das aus einem Gehäusebecher 22 und einem Gehäusedeckel 24 gebildet ist. Der Motorrotor 30 weist eine Motorwelle 32 auf, die eine Pumpenwelle des Pumpenmoduls 14 antreibt.

An dem dem Pumpenmodul 14 abgewandten gegenüberliegenden Längsende ist eine in einer Querebene liegende Leiterbahn-Platine 50 vorgesehen, die einen Platinenkörper 52 mit Leiterbahnen 54 auf ihrer proximalen Seite aufweist. Die proximale Seite des Platinenkörpers 52 ist die dem Motorrotor 30 axial zugewandte Seite, wohingegen die dem Motorrotor 30 axial abgewandte Seite die distalen Seite ist. Auf der proximalen Seite des Platinenkörpers 52 sind sowohl die Steuerungselektronik als auch die Leistungselektronik der Motorsteuerung angeordnet. Ferner sind auf der proximalen Seite des Platinenkörpers drei Hallsensoren 60₁,60₂,60₃ angeordnet, die ungefähr in demselben Radius zur Motoraxialen angeordnet sind, wie die Permanentmagnete 36 des Motorrotors 30.

Die Leistungselektronik der Leiterbahn-Platine 50 ist über die Leiterbahnen 54 und über axiale Verbindungsleitungen 66 elektrisch mit den Magnetspulen 40 verbunden. Jedem Hallsensor 60₁-60₃ ist jeweils ein ferromagnetischer axialer Feldleitstift 62₁,62₂,62₃ zugeordnet, der proximal auf den jeweiligen Hallsensor 60₁,60₂,60₃ aufgesetzt ist. Die axialen Feldleitstifte 62₁-62₃ haben mit ihrem proximalen Längsende nur einen kleinen Abstand zu der axial gegenüberliegenden Stirnseite des Motorrotors 30.

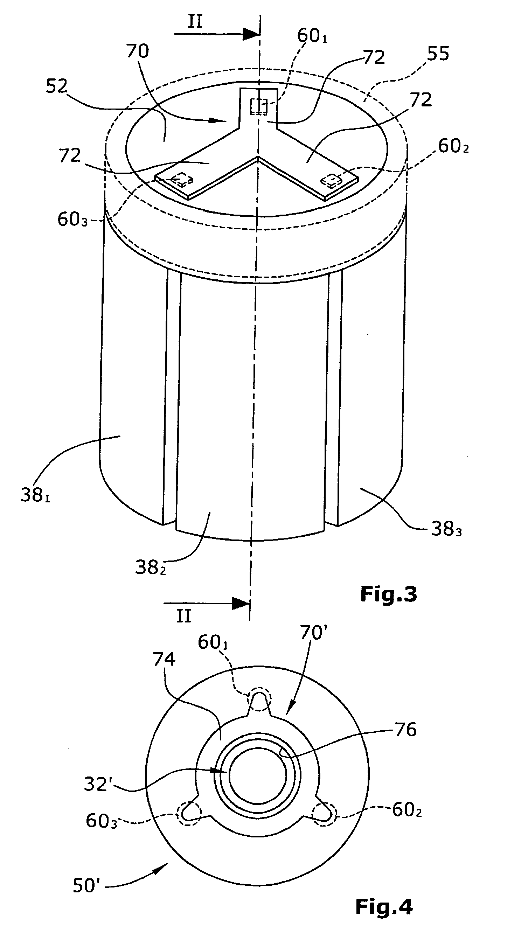

Auf der distalen Seite der Leiterbahn-Platine 50 ist ein sternförmiger dreiarmiger Sensorschlusskörper 70 angeordnet, wie in Figur 3 dargestellt. Der Sensorschlusskörper 70 weist drei von der Mitte ausgehende Radialarme 72 auf, die sich radial jeweils bis zu den zugeordneten Hallsensoren 60₁-60₃ erstrecken. Der Sensorschlusskörper 70 ist einstückig aus einem ferromagnetischen Material hergestellt und ist auf die Platine 50 aufgeklebt.

Die gesamte Leiterbahn-Platine 50 einschließlich der Steuerungselektronik, Leistungselektronik und der Hallsensoren 60, die Feldleitstifte 62₁-62₃, die Verbindungsleitungen 66 und der Sensorschlusskörper 70 sind in einen monolithischen Kunststoff-Gusskörper 55 eingegossen. Die Leiterbahnen 54 der Platine 50 sind über Anschlussleitungen mit einem Motorstecker 68 verbunden.

In der Figur 4 ist ein zweites Ausführungsbeispiel einer Leiterbahn-Platine 50' dargestellt, die eine Rotorwellenöffnung 76 aufweist, durch die die Rotorwelle 32' hindurchragt. Der Sensorschlusskörper 70' weist daher am Rand der Rotorwellenöffnung 76 einen Ring 74 auf, von dem aus drei relativ kurze Radialarme nach außen ragen, die die magnetische Verbindung zu den drei Hallsensoren 60₁-60₃ herstellen.

Wie der Figur 2 entnommen werden kann, wird durch den Sensorschlusskörper 70 auf der distalen Seite der Hallsensoren 60₁-60₃, über die Feldleitstifte 62₁-62₃ proximal der Hallsensoren und den ferromagnetischen Motorrotor 30 jeweils ein magnetischer Kreis gebildet, der nur relativ kurze Magnetspalte aufweist, so dass insgesamt der magnetische Gesamtwiderstand gering ist. Die von den Rotor-Permanentmagneten 36 generierten Magnetfelder weisen im Bereich der Hallsensoren 60₁-60₃ daher relativ hohe Feldstärken auf. Hierdurch liegt an den Hallsensoren 60₁-60₃ ein hohes Signal/Rauschverhältnis vor, das eine Reihe von konstruktiven und konzeptionellen Vereinfachungen ermöglicht, die die elektrische Verlustleistung verringern und die Herstellung vereinfachen.

## Patentansprüche

1. Elektrische Kfz-Fluidikpumpe (10) mit einem elektrischen Antriebsmotor (12), der bürstenlos und elektronisch kommutiert ist, wobei der Antriebsmotor (12) aufweist:
einen permanentmagnetischen Motorrotor (30) mit mehreren Rotorpolen (38₁-38₄),
mehrere statorseitige Magnetspulen (40), **dadurch gekennzeichnet, dass** mindestens zwei statorseitige Hallsensoren (60₁,60₂,60₃), die in einer Querebene liegend exzentrisch derart angeordnet sind, dass sie die axialen Magnetfelder der Rotorpole (38₁-38₄) erfassen, wobei statorseitig ein ferromagnetischer Sensorschlusskörper (70) vorgesehen ist, der die zueinander beanstandet angeordneten Hallsensoren (60₁,60₂,60₃) magnetisch unmittelbar miteinander verbindet, und
der Sensorschlusskörper (70) sternförmig ausgebildet ist und mehrere von der Mitte ausgehende Radialarme (72) aufweist, die jeweils einem Hallsensor (60) zugeordnet sind.

2. Elektrische Kfz-Fluidikpumpe (10) nach Anspruch 1, wobei eine in der Querebene liegende Leiterbahn-Platine (50) vorgesehen ist, auf der die Hallsensoren (60₁,60₂,60₃) angeordnet sind.

3. Elektrische Kfz-Fluidikpumpe (10) nach Anspruch 2, wobei die Hallsensoren (60₁,60₂,60₃) auf der dem Motorrotor (30) axial zugewandten proximalen Seite der Leiterbahn-Platine (50) vorgesehen sind.

4. Elektrische Kfz-Fluidikpumpe (10) nach einem der vorangegangenen Ansprüche, wobei der Sensorschlusskörper (70) auf der der Leiterbahn-Platine (50) axial abgewandten distalen Seite der Leiterbahn-Platine (50) vorgesehen ist.

5. Elektrische Kfz-Fluidikpumpe (10) nach einem der vorangegangenen Ansprüche, wobei jedem Hallsensor (60₁,60₂,60₃) proximal ein im Wesentlichen axial orientierter Feldleitstift (62₁,62₂,62₃) zugeordnet ist.

6. Elektrische Kfz-Fluidikpumpe (10) nach einem der Ansprüche 1-5, wobei die Leiterbahn-Platine (50) eine Rotorwellenöffnung (76) aufweist, durch die eine Rotorwelle (32') hindurchragt, wobei der Sensorschlusskörper (70') einen die Rotorwelle (32') umgebenden Ring (74) aufweist.

7. Elektrische Kfz-Fluidikpumpe (10) nach einem der Ansprüche 2-6, wobei die Leiterbahn-Platine (50) in einen Kunststoff-Gusskörper (55) eingegossen ist.

## Claims

1. Electric fluidic pump (10) for a motor vehicle, having a brushless and electronically commutated electric drive motor (12), the drive motor (12) comprising:
a permanent-magnetic motor rotor (30) with a plurality of rotor poles (38₁ - 38₄),
a plurality of stator-side magnetic coils (40),
**characterized in that**
at least two stator-side Hall sensors (60₁, 60₂, 60₃) which lie in a transversal plane and are arranged eccentrically such that they detect the axial magnetic fields of the rotor poles (38₁ - 38₄), wherein a ferromagnetic sensor circuit member (70) is provided for a direct magnetic connection of the Hall sensors (60₁, 60₂, 60₃) which are arranged spaced apart from each other, and
the sensor terminal member (70) is of a star-shaped design and comprises a plurality of radial arms (72) starting from the center, each arm being assigned to a respective Hall sensor (60).

2. Electric fluidic pump (10) for a motor vehicle according to claim 1, wherein a printed circuit board (50) is provided on which the Hall sensors (60₁, 60₂, 60₃) are arranged, the printed circuit board lying in the transversal plane.

3. Electric fluidic pump (10) for a motor vehicle according to claim 2, wherein the Hall sensors (60₁, 60₂, 60₃) are provided on the proximal side of the printed circuit board (50) facing the motor rotor (30) in the axial direction.

4. Electric fluidic pump (10) for a motor vehicle of one of the preceding claims, wherein the sensor terminal member (70) is provided on the distal side of the printed circuit board (50) averted from the printed circuit board (50) in the axial direction.

5. Electric fluidic pump (10) for a motor vehicle of one of the preceding claims, wherein a substantially axially oriented field conducting pin (62₁, 62₂, 62₃) is assigned to each Hall sensor (60₁, 60₂, 60₃) in the proximal direction.

6. Electric fluidic pump (10) for a motor vehicle of one of claims 1-5, wherein the printed circuit board (50) has a rotor haft opening (76) through which a rotor shaft (32') protrudes, wherein the sensor terminal member (70') comprises a ring (74) surrounding the rotor shaft (32').

7. Electric fluidic pump (10) for a motor vehicle of one of claims 2-6, wherein the printed circuit board (50) is molded into a plastic molded body (55).

## Revendications

1. Pompe à fluide (10) électrique pour véhicules automobiles, avec un moteur d'entraînement (12) électrique sans balais et à commutation électronique, ledit moteur d'entrainement (12) comprenant:
un rotor de moteur (30) à aimantation permanente avec plusieurs pôles de rotor (38₁- 38₄),
plusieurs bobines magnétiques (40), côté stator,
**caractérisée en ce que**
au moins deux capteurs à effet Hall (60₁, 60₂, 60₃), côté stator, situés dans un plan transversal et disposés de manière excentrique de sorte qu'ils détectent les champs magnétiques axiaux des pôles de rotor (38₁ - 38₄), un corps connecteur de capteurs (70) ferromagnétique étant prévu côté stator, ledit corps directement connectant les capteurs à effet Hall (60₁, 60₂, 60₃) magnétiquement, les capteurs étant disposés à distance l'un par rapport à l'autre, et
le corps connecteur de capteurs (70) est conçu en étoile et comprend plusieurs bras radiaux (72) s'étendant à partir du centre, les bras étant associé, respectivement, à un capteur à effet Hall (60).

2. Pompe à fluide (10) électrique pour véhicules automobiles selon la revendication 1, dans laquelle est prévue une platine à circuit imprimé (50) située dans le plan transversal, sur laquelle sont disposés les capteurs à effet Hall (60₁, 60₂, 60₃).

3. Pompe à fluide (10) électrique pour véhicules automobiles selon la revendication 2, dans laquelle les capteurs à effet Hall (60₁, 60₂, 60₃) sont disposés sur le côté proximal de la platine à circuit imprimé (50) dirigé vers le rotor de moteur (30) dans la direction axiale.

4. Pompe à fluide (10) électrique pour véhicules automobiles selon l'une quelconque des revendications précédentes, dans laquelle le corps connecteur de capteurs (70) est disposé sur le côté distal de la platine à circuit imprimé (50) opposé à la platine à circuit imprimé (50) dans la direction axiale.

5. Pompe à fluide (10) électrique pour véhicules automobiles selon l'une quelconque des revendications précédentes, dans laquelle une broche conductrice de champ (62₁, 62₂, 62₃), sensiblement orientée dans la direction axiale, est associée, côté proximal, à chaque capteur à effet Hall (60₁, 60₂, 60₃).

6. Pompe à fluide (10) électrique pour véhicules automobiles selon l'une quelconque des revendications 1-5, dans laquelle la platine à circuit imprimé (50) comprend une ouverture (76) pour l'arbre de rotor, à travers laquelle saille un arbre de rotor (32'), le corps connecteur de capteurs (70') comprenant une bague (74) entourant l'arbre de rotor (32').

7. Pompe à fluide (10) électrique pour véhicules automobiles selon l'une quelconque des revendications 2-6, dans laquelle la platine à circuit imprimé (50) est moulée dans un corps moulé en matière plastique (33).
